# EUROPEAN PATENT SPECIFICATION

(11) **EP 2 899 386 B1**
(45) Date of publication and mention of the grant of the patent: **23.11.2016**
(21) Application number: 13839152.9
(22) Date of filing: 05.09.2013
(51) Int. Cl.: F02D 19/02, F02D 41/00, F02D 41/02, F02D 41/14, F02D 41/30, F02M 21/02, F02M 21/04, F02M 63/00, F01N 3/10

(54) **INTERNAL COMBUSTION ENGINE**
VERBRENNUNGSMOTOR
MOTEUR À COMBUSTION INTERNE

(30) Priority: 21.09.2012 JP 2012208628
(43) Date of publication of application: 29.07.2015
(73) Proprietor: Yanmar Co., Ltd., Osaka-shi, Osaka 530-8311 (JP)
(72) Inventor: NAKAZONO, Toru, Osaka-shi Osaka 530-8311 (JP); RAIHAN Khandoker Abu, Osaka-shi Osaka 530-8311 (JP); OKADA, Hiroyuki, Osaka-shi Osaka 530-8311 (JP)
(74) Representative: Hinkelmann, Klaus
(86) International application number: PCT/JP2013/073910
(87) International publication number: WO 2014/045879

(56) References cited:
- EP-A1- 0 454 875
- WO-A1-98/21463
- DE-A1-102007 036 958
- JP-A- 2006 170 044
- JP-A- 2006 170 044
- JP-A- 2011 122 484
- JP-A- 2012 127 305
- JP-U- S6 229 461
- US-A- 4 674 459

## Description

### Technical Field

The present invention relates to an internal combustion engine comprising a solenoid for performing perturbation.

### Background Art

A three way catalyst is, for example, generally known as an exhaust purification catalyst having oxygen storage capacity. The three way catalyst releases oxygen that it stores into a gas phase when an air-fuel ratio is deviated from a stoichiometric air-fuel ratio to a rich side, and absorbs and stores oxygen in the gas phase when the air-fuel ratio is deviated to a lean side. In this way, the three way catalyst performs its capability for purifying exhaust gas. Therefore, if the air-fuel ratio is excessively deviated to the rich side or to the lean side, an accumulated amount of oxygen in the catalyst is depleted or saturated, thereby, the purification capability is reduced.

Then, conventionally, the following art is proposed: in an internal combustion engine, the air-fuel ratio is perturbed alternately to the rich side or the lean side (perturbation is performed) so as to have the catalyst repeatedly absorb or release oxygen, accordingly, the catalyst is activated. The perturbation is performed by opening and closing alternately a valve (for example, see Patent Document 1).

Also, regarding opening/closing of the valve in the internal combustion engine, a change in an amount of flow relative to a change in an opening degree is constant in an intermediate region compared to two regions between which the intermediate region is located, i.e., a decreasing region where the opening degree is small and an expanding region where the opening degree is large. For this reason, it is known that the valve is opened/closed in the intermediate region (for example, see Patent Document 2).

### Prior Art Documents

### Patent Documents

[Patent Document 1] JP 2007-239698 A
[Patent Document 2] JP 2010-065621 A

DE 10 2007 036 958 A1 discloses an injection device for metering and distributing gaseous fuel into an internal combustion engine. A lambda probe (Lambdasonde LP) is employed in front of the catalyst device (Katalysatorvorrichtung CAT) to meter the actual lambda value, i.e. the ratio of air to fuel, compared with the ratio of the stoichiometric mixture. The lambda probe sends the signal of the metering to the motor-control device. The solenoid injectors disclosed therein can only switch between a closed-status and an opened-status.

US 4 674 459 A discloses an apparatus for metering an air-fuel mixture to an internal combustion engine. The apparatus includes a characteristic field set up with operating quantities of the internal combustion engine for anticipatory control of engine variables that influence the air-fuel mixture and a control arrangement, responsive to at least one engine variable, for correctively influencing the characteristic field values. The characteristic field values are stored in the characteristic field and selected in dependence on operating quantities of the internal combustion engine. The characteristic field values are modified by means of different control methods to correctively influence the same.

### Summary of Invention

### Problem to be Solved by Invention

To perform the perturbation, it is necessary to quickly change the opening degree of the valve, thus, a solenoid valve is used. However, in the solenoid valve, a movable valve biased by a leaf spring or a spring so as to close is moved and opened by an electromagnetic coil resisting the biasing force. For this reason, using the solenoid valve over a long period of time causes decrease of the biasing force of the movable valve, wear of the movable valve, or contamination of a passage for fuel, which results in a change in flow rate characteristics of the valve. Consequently, the use of such a valve over a long period of time causes deviation of the center position of the perturbation from the initially set position, accordingly, the fuel-passing amount is changed and the perturbation cannot be controlled.

Although a conventional valve disclosed by Patent Document 2 is opened/closed in the intermediate region, it is the flow rate characteristics of the valve that change by the use over a long period of time, thus, the perturbation becomes beyond the control. Such a deviation of the center position of the perturbation is not caused by changes in conditions to control air, fuel and the like to be supplied to the valve, but by the change in the valve characteristics due to deterioration of the valve itself with time. Therefore, it is not possible to preliminarily predict the deviation. Thus, when the perturbation cannot be controlled due to the deviation of the center position of the perturbation, it is necessary to perform maintenance such as replacement and cleaning of the valve, which requires stopping the internal combustion engine. Such a maintenance work is bothersome and high cost is required.

The present invention was made in consideration of the above circumstances, and an object of the present invention is to provide an internal combustion engine capable of performing normal perturbation for a long period of time according to changes in a valve with time such as contamination and wear.

### Means for Solving Problem

In order to resolve the above problem, an internal combustion engine according to the present invention is configured to detect a stoichiometric air-fuel ratio by an oxygen sensor and to perform perturbation of an air fuel ratio alternately to a rich side or a lean side using a solenoid valve. The internal combustion engine includes: an adjusting valve disposed in parallel with the solenoid valve; and a control unit, wherein the solenoid valve and the adjusting valve adjust an opening area of a passage for a fuel gas. The control unit stores a control map that indicates a correlation between an opening degree of the solenoid valve and an opening degree of the adjusting valve when the perturbation is performed in an intermediate region, where a change in an amount of flow relative to a change in the opening degree is constant, of an opening/closing region of the solenoid.

In the above-described internal combustion engine, the control unit may update the control map based on deterioration of an intake portion of fuel gas with time.

In the above-described internal combustion engine, the control unit may detect a deviation of a response time of an air-fuel ratio changing due to the perturbation by the solenoid valve so as to update the control map based on the deviation.

In the above-described internal combustion engine, the control unit may control the opening degree of the adjusting valve based on the control map so that the perturbation is performed in the intermediate region of the opening/closing region of the solenoid valve.

In the above-described internal combustion engine, the control unit may include a notifying unit that notifies of wear of the solenoid valve and/or contamination of the adjusting valve when the perturbation cannot be performed in the intermediate region of the opening/closing region of the solenoid valve although the adjusting valve is fully opened.

In the above-described internal combustion engine, the adjusting valve may haves lean controls characteristics, and the control unit may control a lean operation by the adjusting valve.

### Effects of Invention

With the present invention, it is possible to use the solenoid valve always in an appropriate operation region.

Also, it is possible to easily know a timing of maintenance required due to wear of the solenoid valve, contamination of the adjusting valve or the like.

### Brief Description of Drawings

[FIG. 1] FIG. 1 is a schematic view showing an entire schematic configuration of an internal combustion engine according to the present invention.
[FIG. 2] FIG. 2 is a block diagram showing a configuration of an intake portion of the internal combustion engine shown in FIG. 1.
[FIG. 3] FIG. 3 are graphs showing changes in an air-fuel ratio, a sensor output and a valve opening degree respectively with time in perturbation control.
[FIG. 4] FIG. 4(a) is a graph showing a correlation of an initially set fuel supply between a solenoid valve and an A/F valve when the perturbation is performed. FIG. 4(b) is a graph showing the correlation of the fuel supply after passing of time.
[FIG. 5] FIG. 5 is a schematic view showing an entire schematic configuration of a gas heat pump system using the internal combustion engine according to the present invention.
[FIG. 6] FIG. 6 is a schematic view showing an entire schematic configuration of a cogeneration system using the internal combustion engine according to the present invention.

### Modes for Carrying Out Invention

Hereinafter an embodiment of the present invention will be described with reference to the drawings.

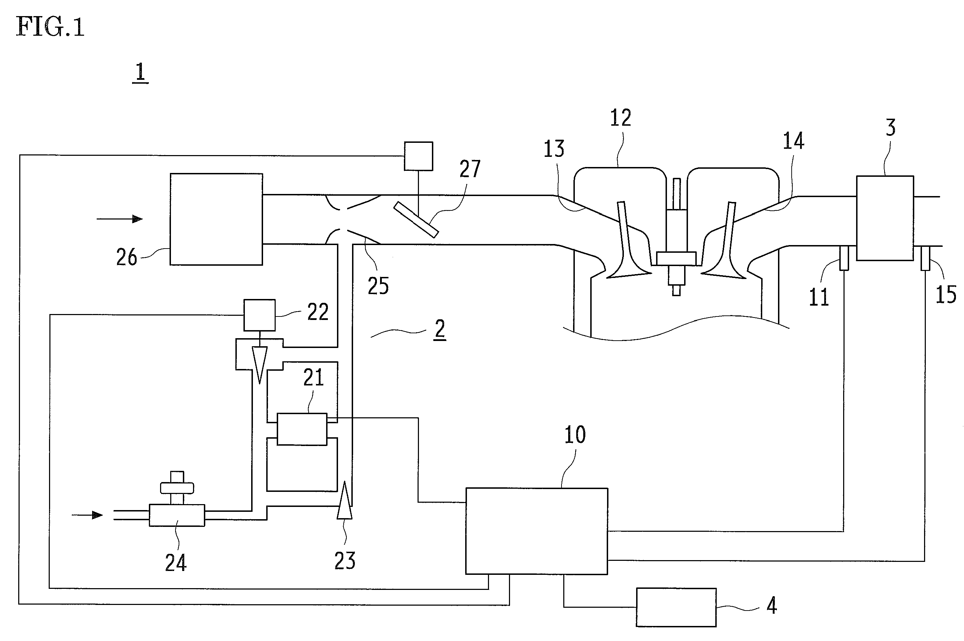

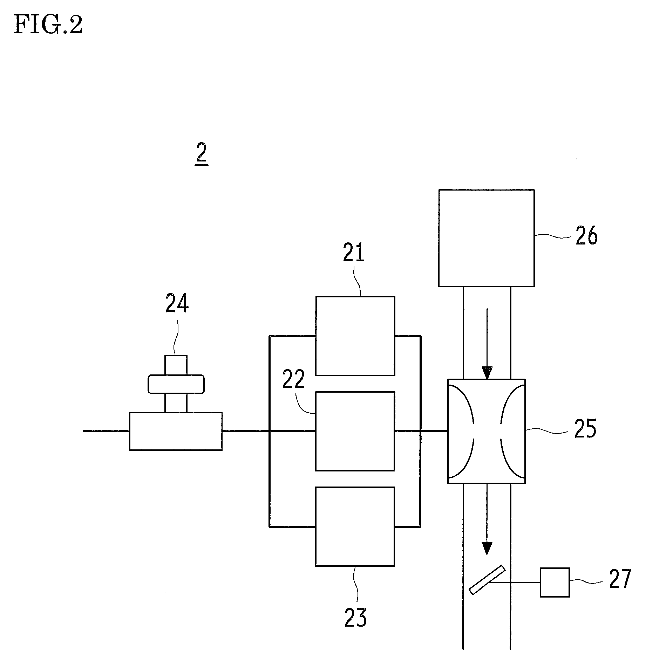

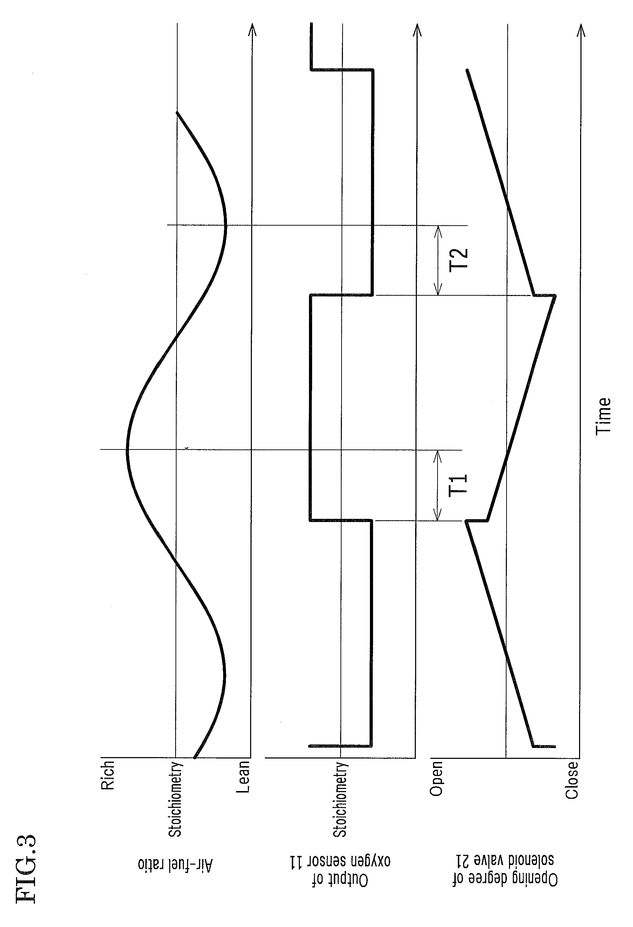

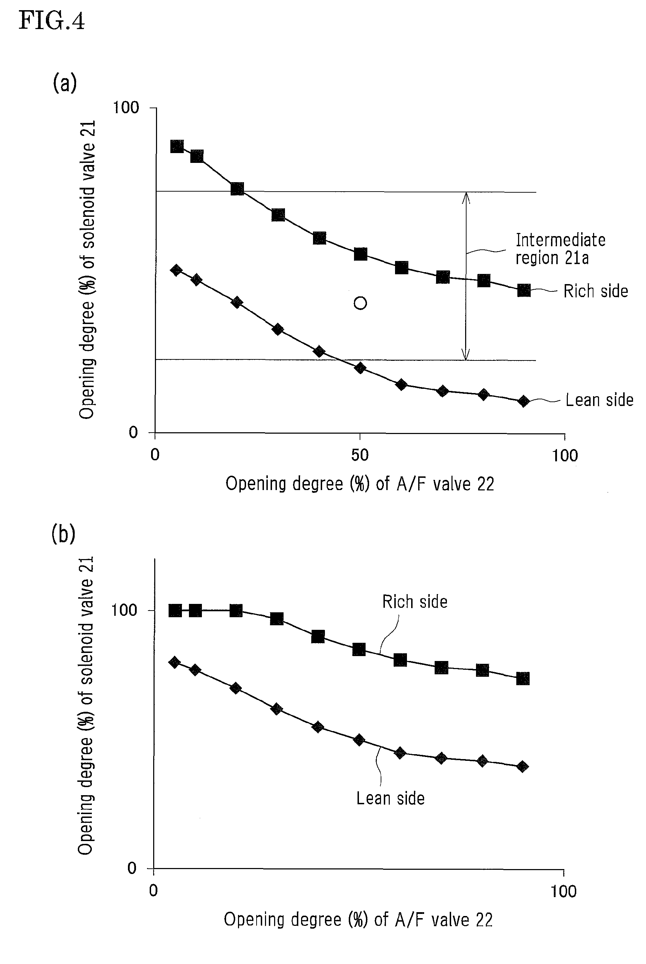

FIG. 1 shows an entire schematic configuration of a gas engine 1 according to the present invention. FIG. 2 shows an intake portion 2 of the gas engine 1. FIG. 3 are graphs showing perturbation control by a control unit 10 of the gas engine 1. FIG. 4 is a graph showing a correlation of an initially set fuel supply between a solenoid valve 21 and an A/F valve 22 in the gas engine 1.

In the gas engine 1, an air-fuel ratio in a stoichiometric operation is detected by an oxygen sensor 11, and the perturbation is performed by the solenoid valve 21. The gas engine 1 includes the A/F valve 22 that is disposed in parallel with the solenoid valve 21, and the control unit 10 that performs the perturbation in an intermediate region 21a of an opening/closing region of the solenoid valve 21 by adjusting the opening degree of an A/F valve 22.

The intake portion 2 is provided with the solenoid valve 21, the A/F valve 22 and a main jet 23 that are connected to each other so as to be in parallel with each other between a regulator 24 and a mixer 25.

The solenoid valve 21 is constituted by a proportional control valve having flow rate characteristics that are set to adjust an opening area through which fuel gas passes, so that the solenoid valve 21 controls at a pinpoint the stoichiometric operation in which an excess air ratio (λ = 1) is in a state of the theoretical air-fuel ratio. In the solenoid valve 21, a movable valve is moved by an electromagnetic coil and is opened at a predetermined opening degree. The movable valve is biased so as to close a flow passage using a biasing force of a leaf spring, a spring or the like. The solenoid valve 21 is opened/closed at a speed of 25Hz, and a duty ratio during opening/closing is changed. Thus, the opening degree can be adjusted. The solenoid valve 21 is not limited to the one having the speed of 25 Hz. It may be the solenoid valve 21 having each frequency used for this kind of perturbation control.

The A/F valve 22 is constituted by a proportional control valve having flow rate characteristics that are set to adjust an opening area of a passage 20 for the fuel gas. The A/F valve 22 is configured to control a lean operation in which the excess air ratio (λ = 1.4 to 1.6) causes lean burn. The A/F valve 22 is configured to adjust the opening degree of the movable valve at every step by rotation of a stepping motor.

The main jet 23 is a valve to adjust, together with the solenoid valve 21 and the A/F valve 22, the amount of fuel that flows from the regulator 24 to the mixer 25. In contrast to the above-described solenoid valve 21 and the A/F valve 22, the opening degree of the main jet 23 is fixed by each number of the main jet 23 to be used.

The regulator 24 is configured to control a pressure of the fuel gas so that the fuel gas is always supplied under constant pressure.

The mixer 25 is constituted by a venturi tube to mix the air from an air filter 26 with the fuel gas. The mixer 25 mixes the fuel gas and the air due to the venturi effect of the air drawn according to the opening degree of the throttle valve 27 provided on the downstream side.

During the lean operation in the intake portion 2, the solenoid valve 21 is closed and the range of the excess air ratio (λ = 1.4 to 1.6) is controlled by controlling the opening/closing degree of the A/F valve 22.

Also, during the stoichiometric operation, while the A/F valve 22 is opened at a predetermined opening degree, for example, at the opening degree of 50 % as shown in FIG. 4(a), the opening/closing degree of the solenoid valve 21 is controlled so that it is the opening degree in the intermediate region 21a of the opening/closing region (in this embodiment, 20 to 55 %) and that the air-fuel ratio is changed to the lean side or the rich side from the stoichiometric operation as the center. Thus, the excess air ratio (λ = 1) for the theoretical air-fuel ratio is controlled.

The intake portion 2 as configured above is connected to an intake port 13 of a cylinder head 12 of the gas engine 1. The gas engine 1 is configured to measure the excess air ratio based on a measurement detection result by the oxygen sensor 11 disposed on an exhaust passage 14. The perturbation is controlled by the oxygen sensor 11 and an oxygen sensor 15. The oxygen sensor 15 is disposed on a rear stage side of a three way catalyst 3 disposed on a rear stage side of exhaust gas.

The perturbation performed by the control unit 10 is described hereinafter.

As shown in FIG. 3, an oxygen concentration of the exhaust gas before flowing into the three way catalyst 3 is measured by the oxygen sensor 11. The oxygen sensor 11 is set to indicate, as a large value, a change in a detected voltage in the stoichiometric air-fuel ratio, thus it indicates clearly the determination whether the air-fuel ratio is leaner or richer than the stoichiometric operation. When it is determined that the air-fuel ratio is richer than the stoichiometric operation, the solenoid valve 21 is moved toward the closing direction where the air-fuel ratio is leaner than the value set for the stoichiometric operation.

Then, oxygen stored in the three way catalyst 3 is released into the exhaust gas to purify the exhaust gas. After a little while, the oxygen stored in the three way catalyst 3 is depleted, then the oxygen sensor 15 disposed on the rear stage side of the three way catalyst 3 indicates the shift to the rich side after a predetermined response time T1 from the switching of the solenoid valve 21.

Also, the oxygen sensor 11 disposed on a front stage side of the three way catalyst 3 clearly indicates determination that the air-fuel ratio is leaner than the stoichiometric air-fuel ratio due to closing movement of the solenoid valve 21 to the leaner side. According to the above determination, the solenoid valve 21 is moved toward the opening direction where the air-fuel ratio is richer than the value set for the stoichiometric operation.

Then, oxygen excessively present in the exhaust gas is absorbed by the three way catalyst 3, and the oxygen stored in the three way catalyst 3 is saturated. Thus, the oxygen sensor 15 disposed on the rear stage side of the three way catalyst 3 indicates the shift to the lean side after a predetermined response time T2 from the switching of the solenoid valve 21.

After that, the air-fuel ratio is perturbed at a predetermined pitch of about 1 to 2 seconds (perturbation is performed). Thus, the oxygen sensor 15 disposed on the rear stage side of the three way catalyst 3 determines that the air-fuel ratio is changed smoothly between the lean side and the rich side relative to the stoichiometric operation. In this case, the three way catalyst 3 absorbs and releases repeatedly the oxygen, thus the active state of the catalyst is maintained.

The above-described predetermined response times T1 and T2 may be a time period after the control unit 10 receives a signal from the oxygen sensor 11, or a time period after the control unit 10 sends instructions to the solenoid valve 21 according to the signal received from the oxygen sensor 11.

In the above-described perturbation, the solenoid valve 21 is opened/closed repeatedly in the intermediate region 21a out of the entire opening/closing region. In the intermediate region 21a, a change in the amount of flow relative to a change in the opening degree is constant. In order to control the perturbation, a control map shown in FIG. 4(a) is input to the control unit 10. FIG. 4(a) indicates a correlation between the opening degree of the A/F valve 22 and the opening degree of the solenoid valve 21 when the solenoid valve 21 is perturbed to the lean side or to the rich side.

The control unit 10 stores each control map as described above according to a corresponding condition that changes based on a rotational speed or output of the engine 1. Theoretically, as shown in FIG. 4(a), the perturbation can be controlled by adjusting, for example, the opening degree of the solenoid valve 21 within the range of about 20 to 55 % while the opening degree of the A/F valve 22 is about 50 %. However, due to the use over a long period of time, the response times T1 and T2 from the switching of the solenoid valve 21 to the shift of the air-fuel ratio are deviated from the respective theoretical times, specifically, one becomes longer than its theoretical time and the other becomes shorter than its theoretical time. That is, in the solenoid valve 21, the movable valve is biased so as to close the flow passage using the biasing force of the leaf spring, the spring or the like. The movable valve is moved by the electromagnetic coil so as to be opened/closed at the speed of 25 Hz, and is opened at the predetermined opening degree obtained by the duty ratio during opening/closing. Therefore, if the opening/closing of the solenoid valve 21 is performed repeatedly for the perturbation over a long period of time, the movable valve is hardly closed properly due to a decreased biasing force or wear of the movable valve. Furthermore, in the A/F valve 22 that maintains the fixed opening degree, the flow passage is blocked by the contamination, thus the flow rate is decreased from the theoretical flow rate. In view of the foregoing, the correlation between the opening degree of the solenoid valve 21 and the opening degree of the A/F valve 22 changes from the initially set correlation as shown in FIG. 4(a) to, finally, the correlation shown in FIG. 4(b). In this changing process, the respective response times T1 and T2 from the switching of the solenoid valve 21 to the shift of the air-fuel ratio differ from the initially set response times T1 and T2. When the response times T1 and T2 are deviated like this, the opening degree of the A/F valve 22 is increased so that the solenoid valve 21 is opened/closed in the intermediate region 21a to the extent possible in order to perform the perturbation. Such a correction is performed, when the above-described response times T1 and T2 are deviated, by rewriting and updating the map indicating the correlation between the opening degree of the solenoid valve 21 and the opening degree of the A/F valve 22 based on the deviation. According to the map, the opening/closing of the A/F valve 22 is performed so that the perturbation is performed by the opening/closing of the solenoid valve 21 in the intermediate region 21a.

Finally, even when the opening degree of the A/F valve 22 is maximally increased, the solenoid valve 21 cannot be opened/closed in the intermediate region 21a, thus the deviation of the response times T1 and T2 is increased. Therefore, the perturbation cannot be controlled.

For this reason, in such a situation where the perturbation cannot be controlled as shown in FIG. 4(b), or before the above situation arises, the control unit 10 sends a signal to a notifying unit 4 so that the notifying unit 4 notifies that the maintenance of the solenoid valve 21 and the A/F valve 22 is required. The notification by the notifying unit 4 may be performed by flashing a lamp, generating alarm sound or stopping the gas engine 1. Also, the notification may be performed by combination of some of the above means.

In the gas engine 1 configured as described above, if contamination or wear of the solenoid valve 21 and the A/F valve 22 generates the deviation in the perturbation control, such a deviation is corrected and the opening degree of the A/F valve 22 is adjusted so that the perturbation is performed constantly in the intermediate region 21a of the solenoid valve 21. Thus, it is possible to perform constantly and normally the perturbation control.

In this case, it is possible to perform the perturbation in the intermediate region 21a out of the entire opening/closing region of the solenoid valve 21. In the intermediate region 21a, the change in the amount of flow relative to the change in the opening degree is constant. Thus, the perturbation control can be performed accurately and stably. Also, if contamination or wear of the solenoid valve 21 and the A/F valve 22 generates the deviation, it is possible to increase the opening degree of the A/F valve 22 so as to control to perform the perturbation in the intermediate region 21a of the solenoid valve 21. Thus, the perturbation control can be performed for a while after the above-described contamination or wear is generated, which results in extension of the lifetime of the solenoid valve 21 and the A/F valve 22, and in reduction of the frequency of maintenance.

In a situation where the perturbation control cannot be performed, or before the above situation arises, it is possible to obtain the above information via the control unit 10. Thus, it is possible to know the maintenance timing of the solenoid valve 21 and the A/F valve 22 easily. Especially, by obtaining the above information in advance, it is possible to stop the gas engine 1 in a planned manner, which is effective, specifically, when the gas engine 1 is operated continuously to drive a heat pump and the like.

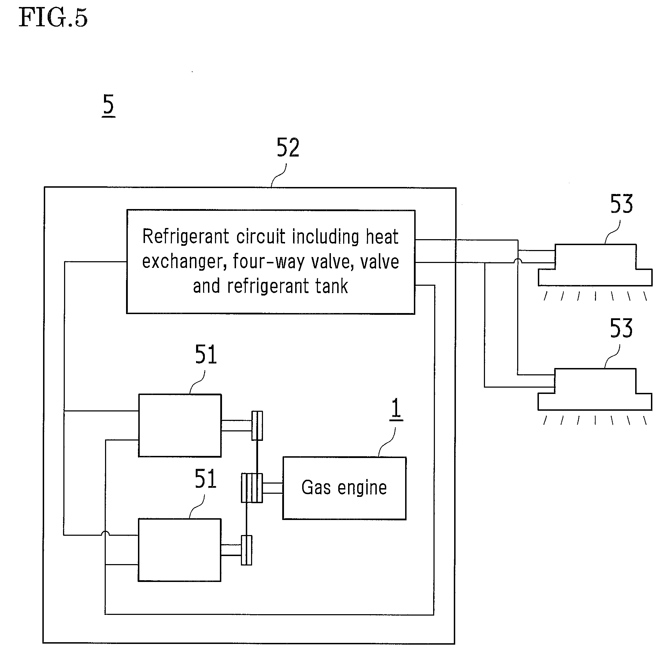

As shown in FIG. 5, the gas engine 1 can be used suitably for a drive source of the gas heat pump system 5. That is, a high load is required of the gas heat pump system 5 in summer or in winter, however, in spring or in autumn, a medium to low load is sufficient. In addition, the gas engine 1 drives generally a plurality of compressors 51 (two compressors in FIG. 5) when the high load is required. In contrast, it drives generally one compressor 51 when the low load is required. Therefore, the gas heat pump system 5 using the gas engine 1, which performs the lean operation when the medium to low load is required, can be switched to the stoichiometric operation when the high load is required. Thus, the cost can be reduced by using the small-displacement gas engine 1.

When the high load is required, the thermal efficiency is decreased due to the stoichiometric operation, while the mechanical efficiency is increased due to, for example, drive of the plurality of compressors 51. Thus, the thermal efficiency is equal to that in the lean operation when the medium to low load is required. Naturally, the thermal efficiency when the medium to low load is required is high because of the lean operation. Therefore, it is possible to improve the annual performance factor (APF). In the gas heat pump system 5 as shown in FIG. 5, two compressors 51 are connected to the gas engine 1. However, to the gas engine 1, only one compressor 51 or at least three compressors 51 may be connected. Also, in the gas heat pump system 5 as shown in FIG. 5, two indoor units 53 are connected to one outdoor unit 52. However, to the outdoor unit 52, only one indoor unit 53 or at least three indoor units 53 may be connected.

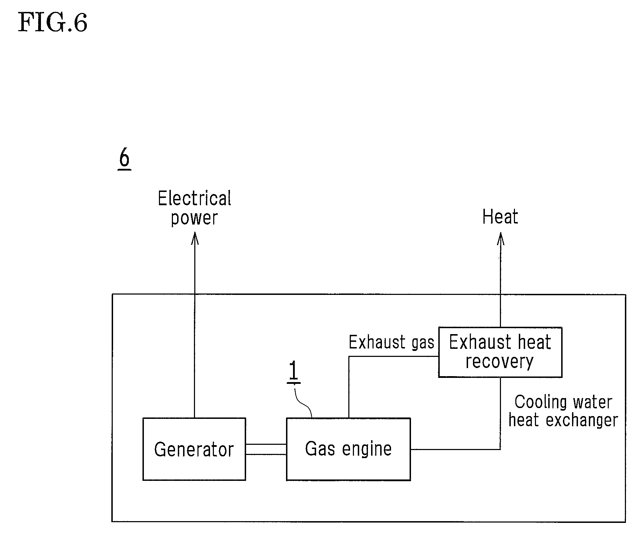

Also, as shown in FIG. 6, the gas engine 1 can be used suitably for the drive source of a cogeneration system 6. That is, in the cogeneration system 6, it is possible to save energy by performing the lean operation as the normal operation and by performing the stoichiometric operation at the time of switching to a heat main operation for generating heat which requires the high load.

In this embodiment, the A/F valve 22 capable of controlling the lean operation is used for the gas engine 1 so as to switch between the lean operation and the stoichiometric operation. However, the present invention is not limited thereto. The A/F valve 22 may be provided only in order to use the solenoid valve 21 in the intermediate region 21a in the perturbation.

Also, in this embodiment, the description is given on the gas engine 1. However, instead of the gas engine 1, various other engines that perform the perturbation control may be used.

The present invention may be embodied in other forms without departing from the gist or essential characteristics thereof. The foregoing embodiment is therefore to be considered in all respects as illustrative and not limiting. The scope of the present invention is indicated by the appended claims rather than by the foregoing description, and all modifications and changes that come within the meaning and range of equivalency of the claims are intended to be embraced therein.

### Description of Reference Numerals

- 1: Gas engine
- 10: Control unit
- 11: Oxygen sensor
- 15: Oxygen sensor
- 2: Intake portion
- 21: Solenoid valve
- 22: A/F valve (adjusting valve)
- 4: Notifying unit
- T: Response time

## Claims

1. An internal combustion engine (1) configured to detect a stoichiometric air-fuel ratio by an oxygen sensor (11) and to perform a perturbation of an air-fuel ratio alternately to a rich side or a lean side using a solenoid valve (21), comprising:
an adjusting valve (22) disposed in parallel with the solenoid valve (21); and
a control unit (10),
wherein the solenoid valve (21) and the adjusting valve (22) adjust an opening area of a passage for a fuel gas, and
wherein the control unit (10) stores a control map that indicates a correlation between an opening degree of the solenoid valve (21) and an opening degree of the adjusting valve (22) when the perturbation is performed in an intermediate region (21a), where a change in an amount of flow relative to a change in the opening degree is constant, of an opening/closing region of the solenoid valve (21).

2. The internal combustion engine (1) according to claim 1, wherein the control unit (10) updates the control map based on deterioration of an intake portion (2) of fuel gas with time.

3. The internal combustion engine (1) according to claim 2, wherein the control unit (10) detects a deviation of a response time (T1, T2) of an air-fuel ratio changing due to the perturbation by the solenoid valve (21) so as to update the control map based on the deviation.

4. The internal combustion engine (1) according to claim 1, wherein the control unit (10) controls the opening degree of the adjusting valve (22) based on the control map so that the perturbation is performed in the intermediate region (21a) of the opening/closing region of the solenoid valve (21).

5. The internal combustion engine (1) according to claim 2, wherein the control unit (10) controls the opening degree of the adjusting valve (22) based on the control map so that the perturbation is performed in the intermediate region (21a) of the opening/closing region of the solenoid valve (21).

6. The internal combustion engine (1) according to claim 3, wherein the control unit (10) controls the opening degree of the adjusting valve (22) based on the control map so that the perturbation is performed in the intermediate region (21a) of the opening/closing region of the solenoid valve (21).

7. The internal combustion engine (1) according to any one of claims 1 to 6, wherein the control unit (10) includes a notifying unit (4) that notifies of wear of the solenoid valve (21) and/or contamination of the adjusting valve (22) when the perturbation cannot be performed in the intermediate region (21a) of the opening/closing region of the solenoid valve (21) although the adjusting valve (22) is fully opened.

8. The internal combustion engine (1) according to any one of claims 1 to 6,
wherein the adjusting valve (22) has lean controls characteristics, and
wherein the control unit (10) controls a lean operation by the adjusting valve (22).

## Patentansprüche

1. Ein Verbrennungsmotor (1), der eingerichtet ist, um ein stöchiometrisches Luft-Kraftstoff-Verhältnis mit einem SauerstoffSensor (11) zu detektieren und eine Perturbation eines Luft-Kraftstoff-Verhältnisses alternierend auf eine fette Seite oder eine magere Seite unter Verwendung eines Magnetventils (21) durchzuführen, umfassend:
ein Justierventil (22), welches parallel zum Magnetventil angeordnet ist; und
eine Kontrolleinheit (10),
worin das Magnetventil (21) und das Justierventil (22) eine Öffnungsfläche eines Durchgangs für Kraftstoffgas einstellen, und
worin die Kontrolleinheit (10) ein Kontrollkennfeld speichert, welches eine Korrelation zwischen einem Öffnungsgrad des Magnetventils (21) und einem Öffnungsgrad des Justierventils (22) anzeigt, wenn die Perturbation in einem Zwischenbereich (21a) eines Öffnungs-/Schließungsbereichs des Magnetventils (21) durchgeführt wird, wo eine Änderung in einer Flußmenge relativ zu einer Änderung in dem Öffnungsgrad konstant ist.

2. Der Verbrennungsmotor (1) nach Anspruch 1, worin die Kontrolleinheit (10) das Kontrollkennfeld aktualisiert, basierend auf einer Verschlechterung einer Einlassmenge (2) an Kraftstoffgas pro Zeit.

3. Der Verbrennungsmotor (1) nach Anspruch 2, worin die Kontrolleinheit (10) eine Abweichung einer Reaktionszeit (T1, T2) einer Änderung eines Luft-Kraftstoff-Verhältnisses detektiert, bedingt durch die Perturbation durch das Magnetventil (21), um das Kontrollkennfeld basierend auf der Abweichung zu aktualisieren.

4. Der Verbrennungsmotor (1) nach Anspruch 1, worin die Kontrolleinheit (10) den Öffnungsgrad des Justierventils (22) kontrolliert, basierend auf dem Kontrollkennfeld, so dass die Perturbation in dem Zwischenbereich (21a) des Öffnungs-/Schließungsbereichs des Magnetventils (21) durchgeführt wird.

5. Der Verbrennungsmotor (1) nach Anspruch 2, worin die Kontrolleinheit (10) den Öffnungsgrad des Justierventils (22) kontrolliert, basierend auf dem Kontrollkennfeld, so dass die Perturbation in dem Zwischenbereich (21a) des Öffnungs-/Schließungsbereichs des Magnetventils (21) durchgeführt wird.

6. Der Verbrennungsmotor (1) nach Anspruch 3, worin die Kontrolleinheit (10) den Öffnungsgrad des Justierventils (22) kontrolliert, basierend auf dem Kontrollkennfeld, so dass die Perturbation in dem Zwischenbereich (21a) des Öffnungs-/Schließungsbereichs des Magnetventils (21) durchgeführt wird.

7. Der Verbrennungsmotor (1) nach einem der Ansprüche 1 bis 6, worin die Kontrolleinheit (10) eine Meldeeinheit (4) beinhaltet, welche eine Abnutzung des Magnetventils (21) und/oder eine Kontamination des Justierventils (22) meldet, wenn die Perturbation nicht in dem Zwischenbereich (21a) des Öffnungs-/Schließungsbereichs des Magnetventils (21) durchgeführt werden kann, obwohl das Justierventil (22) vollständig geöffnet ist.

8. Der Verbrennungsmotor (1) nach einem der Ansprüche 1 bis 6,
worin das Justierventil (22) eine magere Steuerkennlinie hat, und
worin die Kontrolleinheit (10) einen mageren Betrieb durch das Justierventil (22) kontrolliert.

## Revendications

1. Moteur à combustion interne (1) configuré pour détecter un rapport air-carburant stoechiométrique par un capteur d'oxygène (11) et pour effectuer en alternance une perturbation d'un rapport air-carburant vers un côté riche ou un côté pauvre au moyen d'une électrovanne (21), comprenant:
une vanne d'ajustage (22) disposée en parallèle avec l'électrovanne (21); et
une unité de commande (10),
dans lequel l'électrovanne (21) et la vanne d'ajustage (22) ajustent une zone d'ouverture d'un passage pour un gaz combustible, et
dans lequel l'unité de commande (10) enregistre un plan de commande qui indique une corrélation entre un degré d'ouverture de l' électrovanne (21) et un degré d'ouverture de la vanne d'ajustage (22) lorsque la perturbation est réalisée dans une zone intermédiaire (21a) d'une zone d'ouverture / fermeture de l'électrovanne (21) où un changement d'une quantité d'écoulement par rapport à une variation du degré d'ouverture est constant.

2. Moteur à combustion interne (1) selon la revendication 1, dans lequel l'unité de commande (10) met à jour avec le temps le plan de commande sur la base de la détérioration d'une section d'admission (2) de gaz combustible.

3. Moteur à combustion interne (1) selon la revendication 2, dans lequel l'unité de commande (10) détecte une déviation d'un temps de réponse (T1, T2) d'un rapport air-carburant changeant due à la perturbation de l'électrovanne (21) de manière à mettre à jour le plan de commande sur la base de la déviation.

4. Moteur à combustion interne (1) selon la revendication 1, dans lequel l'unité de commande (10) contrôle le degré d'ouverture de la vanne d'ajustage (22) sur la base du plan de commande de sorte que la perturbation est effectuée dans la zone intermédiaire (21a) de la zone d'ouverture / fermeture de l'électrovanne (21).

5. Moteur à combustion interne (1) selon la revendication 2, dans lequel l'unité de commande (10) contrôle le degré d'ouverture de la vanne d'ajustage (22) sur la base du plan de commande de sorte que la perturbation est effectuée dans la zone intermédiaire (21a) de la zone d'ouverture / fermeture de l'électrovanne (21).

6. Moteur à combustion interne (1) selon la revendication 3, dans lequel l'unité de commande (10) contrôle le degré d'ouverture de la vanne d'ajustage (22) sur la base du plan de commande de sorte que la perturbation est effectuée dans la zone intermédiaire (21a) de la zone d'ouverture / fermeture de l'électrovanne (21).

7. Moteur à combustion interne (1) selon l'une quelconque des revendications 1 à 6, dans lequel l'unité de commande (10) comprend une unité de notification (4) qui notifie l'usure de l'électrovanne (21) et / ou la contamination de la vanne d'ajustage (22) lorsque la perturbation ne peut pas être effectuée dans la zone intermédiaire (21a) de la zone d'ouverture / fermeture de l'électrovanne (21) bien que la vanne d'ajustage (22) est complètement ouverte.

8. Moteur à combustion interne (1) selon l'une quelconque des revendications 1 à 6, dans lequel la vanne d'ajustage (22) présente des contrôles caractéristiques de carburant pauvre, et
dans lequel l'unité de commande (10) contrôle une opération de carburant pauvre par la vanne d'ajustage (22).
